# DEMANDE DE BREVET EUROPEEN

(11) **EP 4 183 473 A1**
(43) Date de publication de la demande: **24.05.2023**
(21) Numéro de dépôt: 21306606.1
(22) Date de dépôt: 18.11.2021
(51) Int. Cl.: B01D 53/14

(54) **DISPOSITIF ET PROCÉDÉ POUR LA SÉPARATION DE DEUX CONSTITUANTS GAZEUX TELS QUE DU MÉTHANE ET DU DIOXYDE DE CARBONE CONTENUS DANS UN BIOGAZ**

(71) Demandeur: Institut National des Sciences Appliquées de Toulouse, 31077 Toulouse Cedex 4 (FR); Institut national de recherche pour l'agriculture, l'alimentation et l'environnement, 75007 Paris (FR); CENTRE NATIONAL DE LA RECHERCHE SCIENTIFIQUE (CNRS), 75016 Paris (FR); Les Ateliers des Graves, 31270 Villeneuve-Tolosane (FR); Epurtek, 31520 Ramonville-Saint-Agne (FR)
(72) Inventeur: Hébrard, Gilles, 31077 TOULOUSE (FR); Wantz, Eliot, 31077 TOULOUSE (FR); Malinge, Olivier, 31270 VILLENEUVE-TOLOSANE (FR); Of, Julien, 31270 VILLENEUVE-TOLOSANE (FR); Benizri, David, 31520 RAMONVILLE-SAINT-AGNE (FR)
(74) Mandataire: Regimbeau

(57) **Abrégé**

L'invention concerne un dispositif pour la séparation de méthane et de dioxyde de carbone contenus dans un biogaz issu d'une méthanisation. Le dispositif comporte une colonne de lavage (CL) par absorption liquide-gaz et un circuit de régénération à mélangeur statique (MS). Le dispositif comporte entre la sortie de la colonne de lavage (CL) et le mélangeur statique (MS) un détendeur (GLCC) à séparateur cylindrique de type cyclone, la sortie de gaz dudit détendeur (GLCC) étant envoyée avec le biogaz, en entrée de la colonne de lavage (CL), le circuit de régénération comportant une cuve de séparation en sortie du mélangeur statique, caractérisé en ce que ledit circuit de régénération comporte en outre une pompe à vide (PV) pour l'évacuation du CO2 séparé du liquide régénéré dans une cuve de séparation (CS) en sortie du mélangeur statique (MS).

## Description

### Domaine technique général et art antérieur

La présente invention concerne la séparation des constituants gazeux d'un biogaz, tels que typiquement du méthane ou du dioxyde de carbone d'un biogaz issu d'une méthanisation.

Elle propose notamment un dispositif de séparation, ainsi qu'un procédé d'utilisation d'un tel dispositif.

L'invention trouve en particulier avantageusement application pour les centrales électriques de nouvelle génération fonctionnant grâce à la technologie du dioxyde de carbone supercritique (sCO2) (technologie STEP ou « Supercritical Transformational Electric Power » selon la terminologie anglo-saxonne). Elle trouve également une application avantageuse pour la production simultanée de bio-CH4 et de bio-CO2 par de petites unités de méthanisation (typiquement de 20 à 100 Nm3/h de biogaz brut), notamment des unités du type de celles installées dans les exploitations agricoles.

De telles unités présentent un fort intérêt tant du point de vue sociétal, que du point de vue environnemental et du point de vue économique. En France, où la biomasse est présente en très grande quantité, elles s'inscrivent parfaitement dans la perspective d'un développement territorial centré sur la valorisation du carbone renouvelable.

Les coûts de production unitaires sur de petites exploitations sont toutefois actuellement sensiblement plus élevés que ceux des installations de grandes capacités.

Il existe donc un besoin pour des solutions qui permettent d'atteindre des performances industrielles, environnementales et économiques de très bon niveau, y compris pour le traitement de biogaz issus de petites unités de méthanisation.

De nombreuses solutions ont été proposées pour valoriser le biogaz brut.

Une technique particulière est celle du lavage à l'eau. Le système utilisé pour un tel lavage comporte classiquement :
- Une colonne de lavage, où le biogaz est amené sous haute pression à contre-courant d'une solution aqueuse liquide apte à absorber spécifiquement le dioxyde de carbone contenu dans le biogaz ;
- le cas échéant, des moyens « flash » pour la récupération et la réinjection dans le circuit de traitement d'une partie du méthane dissous ;
- une colonne dite de « stripping » pour la régénération de l'eau de lavage par désorption du CO2 et du CH4 résiduel (quelques pourcents) et évacuation de différents gaz non valorisables.

Une telle solution s'avère particulièrement onéreuse, puisqu'elle multiplie le nombre de colonnes ; en outre, elle entraine la présence d'O2 dans l'eau régénérée, peu compatible avec la récupération du CH4, et la dilution du CO2 dans le flux d'air en sortie de la colonne de « stripping », compliquant sa valorisation.

Il a déjà été proposé dans la demande de brevet FR-A-2 972 643 de substituer à la colonne de « stripping », un mélangeur statique associé à une cuve de stockage. Le mélangeur statique et la colonne de stockage assure la fonction de séparation entre le CO2 et le liquide.

Cette solution permet des gains importants en termes d'investissements et de coûts de fonctionnement. Il permet en outre une récupération de CO2 concentré valorisable. Il conforte le modèle économique et le bilan environnemental.

La régénération de l'eau y est toutefois limitée par la pression de désorption. Celle-ci est réalisée à pression atmosphérique et l'eau reste au contact d'une phase gaz très concentrée en CO2. Dans ces conditions, d'après la loi de Henry régissant l'équilibre thermodynamique du soluté entre le gaz et le liquide, la pureté du méthane est limitée à 90 %.

On pourra sur ce sujet avantageusement se référer à la thèse suivante :
David BENIZRI - Epuration du biogaz à la ferme : EPUROGAS, une solution énergétique et économique d'avenir. Etude expérimentale et modélisation d'un procédé d'absorption de dioxyde de carbone avec de l'eau sous pression à une échelle industrielle - Thèse Toulouse INSA 2016*.*

Par ailleurs, des perfectionnements ont également été proposés par la demande WO2015135921, pour optimiser de façon simple le taux de récupération du CH4. Dans cette demande de brevet, le pied de colonne d'eau de la colonne principale est élargi, ce qui aboutit à une diminution de la vitesse liquide descendante et donc à une réduction directe de l'effet d'entraînement des microbulles de gaz constituées de CH4 et CO2 et générées à l'interface gaz/liquide dans la colonne principale lorsque le liquide ruisselant sur le garnissage atteint la surface du pied de colonne d'eau. De ce fait, plus aucune microbulle n'est entraînée directement vers la sortie en bas de colonne et vers le mélangeur statique. Ceci réduit considérablement les pertes de CH4 et améliore le taux de récupération de CH4.

Néanmoins, une perte de CH4 subsiste à travers la sortie de liquide sous forme de gaz dissous. Cette perte n'est en effet aucunement réduite par l'élargissement du pied d'eau.

### Présentation générale de l'invention

L'invention propose une solution qui permet à la fois
- des degrés de pureté très élevés pour les constituants gazeux et notamment pour le méthane et le dioxyde de carbone,
- des taux de récupération encore amélioré.

Un autre but de l'invention est de proposer une solution d'épuration simple et performante, nécessitant de faibles investissements et moyens de fonctionnement, permettant de traiter de faibles débits de biogaz avec une limitation des consommations énergétiques et une bonne acceptabilité environnementale.

Notamment, la solution de production simultanée du bio-CH4 et du bio-CO2 qui est proposée est applicable et accessible économiquement au secteur agricole, frugal dans sa conception et son fonctionnement.

Plus particulièrement, selon un premier aspect, l'invention concerne un dispositif pour la séparation de deux constituants gazeux dans un biogaz (typiquement du méthane et du dioxyde de carbone contenus dans un biogaz issu d'une méthanisation), l'un des deux constituants gazeux étant susceptible d'être soluble (typiquement le dioxyde de carbone), comportant une colonne de lavage par absorption liquide-gaz, ladite colonne comprenant une zone de séparation et un réservoir situé sous ladite zone de séparation,

la zone de séparation comportant des moyens de mise en contact, par circulation à contre-courant, du biogaz et d'une solution liquide apte à absorber sélectivement le constituant gazeux soluble dans celle-ci,
le réservoir étant adapté pour recevoir un volume de solution absorbante dans laquelle est dissous le constituant gazeux soluble, ledit réservoir comportant une sortie pour l'évacuation de la solution absorbante vers un circuit de régénération,
ledit circuit de régénération comportant un mélangeur statique.

Le circuit de régénération comporte une cuve de séparation (CS) en sortie du mélangeur statique (MS), ainsi que des moyens de dépression (typiquement, une pompe à vide), positionnés en sortie du mélangeur statique (MS), et configurés pour atteindre, en sortie, une pression comprise entre de 0.01 à 0.8 bar permettant la désorbtion du constituant gazeux soluble.

Avec de tels moyens, la pression de désorption est abaissée et la régénération du liquide et la récupération du CO2 sont optimisées. Ceci permet d'augmenter le pouvoir absorbant de la solution et au final d'améliorer le % de CH4 et CO2 en sortie.

Le dispositif comporte entre la sortie du réservoir et le mélangeur statique un détendeur (« flash »), la sortie de gaz dudit détendeur étant envoyée avec le biogaz, en entrée de la colonne de lavage, la pression du gaz en sortie dudit détendeur étant une pression intermédiaire entre la pression dans la colonne et la pression atmosphérique.

Ce détendeur sert ainsi de tampon entre la pression du réservoir et celle de la pompe à vide afin de permettre une réduction de pression progressive entre les éléments.

Le détendeur est par exemple un détendeur à séparateur cylindrique de type cyclone.

Un tel détendeur permet, à faibles coûts, de réaliser un dégazage à pression moyenne et de favoriser l'obtention d'un mélange riche en méthane, permettant d'augmenter le taux de récupération du méthane.

Selon un autre aspect également, l'invention propose un procédé pour la séparation de méthane et de dioxyde de carbone contenus dans un biogaz issu d'une méthanisation.

La séparation est réalisée au moyen d'un dispositif proposé ci-dessus, notamment selon les deux phases suivantes : selon une première phase le dispositif travaille sur le biogaz brut, le biogaz épuré produit étant stocké, puis selon une deuxième phase, le dispositif traite le biogaz épuré produit lors de la première phase.

Par ailleurs, l'invention concerne en outre une installation de méthanisation, notamment pour exploitation agricole comportant un digesteur de méthanisation et un dispositif de séparation du type proposé.

Elle comporte également le cas échéant un gazomètre pour le stockage du gaz épuré produit lors de la première phase d'une mise en œuvre du procédé de fonctionnement discontinu.

Les avantages présentés par le mode discontinu sont de permettre, sans difficultés ou contraintes techniques, d'atteindre les SPEC de la réinjection gaz réseau et d'utiliser pour cela la version standard de l'EPUROGAZ. Seule la mise à disposition d'un gazomètre est nécessaire pour la phase de stockage. L'autre avantage est de pouvoir gérer la discontinuité de production du biogaz par le méthaniseur.

### Brève description des dessins

D'autres caractéristiques et avantages de l'invention ressortiront encore de la description qui suit, laquelle est purement illustrative et non limitative, et doit être lue en regard des figures annexées sur lesquelles :

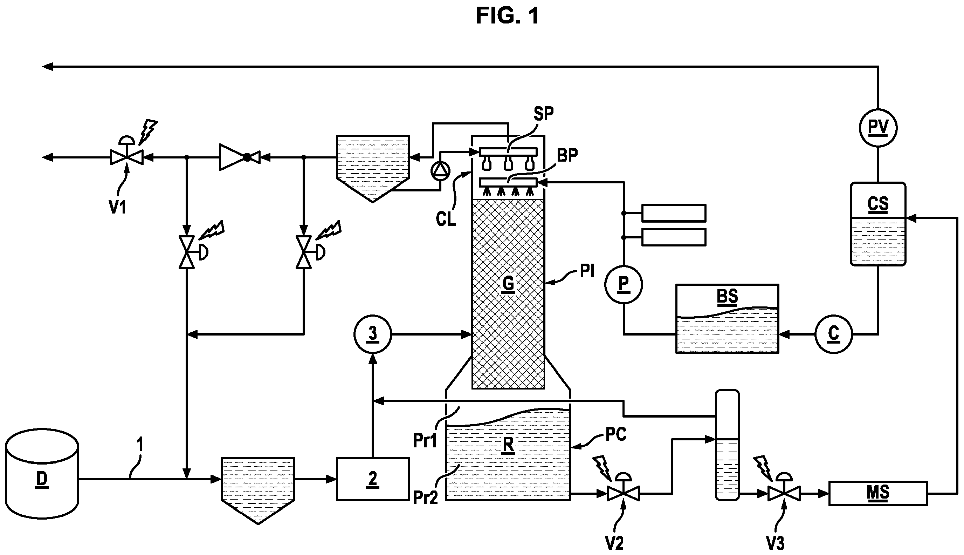

- la figure 1 est un schéma illustrant un exemple de dispositif conforme à un mode de réalisation possible de l'invention.

### Description d'un ou plusieurs modes de mise en œuvre et de réalisation

### Structure générale d'un exemple de dispositif

Le dispositif illustré sur la figure 1 comporte en amont d'une colonne de lavage CL, un drain 1 qui collecte les condensats de biogaz et une unité 2 de désulfurisation du biogaz.

Le biogaz brut est extrait d'un digesteur D de méthanisation et est refroidi, typiquement à température ambiante ou une température inférieure. Les condensats sont collectés et évacués par le drain 1 vers l'unité 2 de désulfurisation du biogaz. Ladite unité 2 (typiquement à limaille de fer ou charbon actif) permet d'éliminer le sulfure d'hydrogène pour descendre par exemple en dessous de 300 ppm.

En sortie de cette unité 2, un compresseur 3 assure la mise sous pression du gaz avant son injection dans la portion intermédiaire PI de la colonne de lavage à garnissage CL.

La colonne de lavage CL est par exemple du type de celle décrite dans la demande WO2015135921. Elle présente, dans sa portion intermédiaire PI, une zone de garnissage G qui forme un labyrinthe au travers de laquelle transitent à contre-courant l'un de l'autre :
- d'une part le biogaz mis également sous pression qui monte vers le sommet de la colonne,
- d'autre part un liquide mis sous pression, généralement de l'eau.

Différents types de matériaux de garnissage peuvent être envisagés pour optimiser l'absorption du CO2 dans la colonne CL tout en évitant l'engorgement.

Le biogaz valorisé est récupéré en tête de colonne CL via une vanne de régulation de pression V1 (réglée à la pression souhaitée, par exemple 5 à 10 bars).

Une pompe P à eau assure l'injection du liquide en tête de colonne via un système de buses de pulvérisation BP.

Comme on le verra ci-après ce liquide peut être principalement le liquide régénéré par le dispositif.

La solution absorbante chargée en dioxyde de carbone s'écoule, sous forme de gouttes, depuis le garnissage G, après avoir traversé celui-ci et s'être chargé en CO2, jusqu'au réservoir R en pied de colonne PC.

En pied de colonne, l'eau saturée en gaz dissous est libérée par une vanne motorisée V2.

Le niveau de solution absorbante en pied de colonne PC est régulé grâce à cette vanne V2, de sorte à ce que sa surface supérieure se trouve en permanence située entre des capteurs de niveau prévus à cet effet sur la colonne CL (capteurs de pression Pr1 et Pr2).

Comme proposé dans la demande WO2015135921, pour éviter les fuites de biogaz, le pied de colonne PC présente un diamètre plus important (par exemple 0,5 m) que le reste de la colonne (par exemple 0,26 m). Cela évite que les microbulles de biogaz soient entraînées vers le bas par le flux liquide en diminuant sa vitesse.

L'écoulement polyphasique en sortie de la vanne de régulation V2 est envoyé dans un circuit pour la régénération de l'eau. Comme proposé dans la demande FR 2.972.643, le circuit comporte un mélangeur statique MS qui favorise la désorption des gaz. Ce mélangeur MS permet en particulier de créer une zone de turbulence à l'intérieur du conduit dans lequel circule l'écoulement. Il facilite ainsi la libération du dioxyde de carbone par rapport à l'eau, la turbulence créant des bulles de dioxyde de carbone qui au fur et à mesure de leur progression au travers du conduit, finissent par s'associer les unes aux autres pour former un volume unique de dioxyde de carbone.

L'eau déchargée est ensuite déversée dans une cuve de séparation CS dans laquelle le dioxyde de carbone est libéré. La phase gazeuse ainsi séparée du liquide est évacuée, tandis que l'eau déchargée est déversée dans un bac de stockage BS via un circulateur C.

L'eau régénérée est quant à elle pompée (pompe P) vers la colonne CL et les buses de pulvérisation BP, pour un nouveau cycle d'absorption

Les conduites d'eau sont préférablement en acier inoxydable et/ou en polychlorure de vinyle, et les conduites de gaz sont en acier inoxydable uniquement.

Le haut de la colonne est préférablement en acier inoxydable

Le réservoir de stockage est en polyéthylène haute densité comme.

Le bas de la colonne est préférablement en acier inoxydable.

### Pompe à vide

Une pompe à vide PV est prévue sur la cuve de séparation pour évacuer la phase gazeuse ainsi séparée du liquide.

Cette pompe à vide PV ainsi associée au mélangeur statique MS participe à l'optimisation de la régénération de l'eau et de la récupération du CO2. Elle fonctionne à une pression inférieure à la pression atmosphérique, préférentiellement entre 0,1 à 0,8bars et plus préférentiellement à 0,1 bar.

Au final, la pureté des flux de CO2 et de CH4 en sortie est améliorée.

La qualité de l'eau régénérée est également meilleure.

### Séparateur gaz-liquide cyclindriques de type cyclone (GLCC)

Afin de parfaire encore le taux de récupération du CH4, le dispositif intègre en outre un « flash » intermédiaire (détente à pression intermédiaire) entre la sortie liquide de la colonne d'absorption (vanne V2) et le système de régénération du liquide absorbant (mélangeur statique MS et cuve CS).

Cette étape de détente intermédiaire permet de renvoyer en tête de colonne la première partie de gaz désorbé, plutôt riche en CH4, le méthane étant moins soluble dans l'eau que le CO2.

La détente intermédiaire est en l'occurrence réalisée par un séparateur cylindrique de type cyclone (GLCC ou « Gas/Liquid Cylindrical Cyclone » selon la terminologie anglo-saxonne).

Les détenteurs GLCC sont connus et classiquement utilisés dans le domaine pétrolier, pour séparer les fractions gaz et liquide du pétrole brut.

Pour un exemple de détendeur à séparateur cylindrique de type cyclone

Dans un tel détendeur GLCC, le mélange gaz/liquide alimente tangentiellement un réceptacle cylindrique vertical, qui est un récipient sous pression dans lequel se réalise la séparation gaz/liquide.

Le dimensionnement du détendeur GLCC et son montage dans le circuit entre la sortie liquide de la colonne CL et le système de régénération du liquide absorbant sont adaptés en fonction d'une part des conditions opératoires de débit et de fraction du gaz liquide introduit dans le détendeur et d'autre part de la pression intermédiaire de dégazage attendu (entre 2 bars et 6 bars pour le GLCC alors que la colonne principale d'absorption travaille à 10 bars).

Une vanne commandée V3 permet de gérer le débit du liquide en sortie du détendeur GLCC.

Ce dégazage à pression intermédiaire favorise l'obtention d'un mélange riche en méthane que l'on renvoie dans la partie intermédiaire de la colonne via le compresseur 3, augmentant ainsi la fraction molaire de CH4 du biogaz brut à traiter dans la colonne.

Il en résulte une augmentation supplémentaire de la proportion de CH4 dans le gaz épuré.

En effet la colonne est dimensionnée pour une efficacité donnée d'absorption de CO2 : plus l'entrée est pauvre en CO2 (donc riche en CH4), plus la sortie est pauvre en CO2 (donc riche en CH4).

La mise en place du détendeur GLCC est donc favorable à la fois à l'augmentation du taux de récupération et à l'augmentation de la pureté en CH4 en sortie.

En intégrant ce « flash » intermédiaire, on améliore également la pureté de la sortie bio-CO2. En perspective d'une valorisation de ce gaz, il doit présenter une pureté optimale en CO2. En retirant la fraction de méthane dégazé lors de la détente à pression intermédiaire, on augmente ainsi la fraction de CO2 contenue dans la sortie bio-CO2.

### Exemples de résultats

Les tableaux ci-dessous présentent les résultats obtenus par simulation pour différentes conditions de fonctionnement du détendeur GLCC en fonction de la pression intermédiaire Pint en sortie du détendeur et de la pression principale d'absorption Pcol de la colonne CL, ainsi que de la pression Pdés pour la pression imposée par la pompe à vide dans la cuve intermédiaire. Qliq, Qgaz et Qdés sont respectivement les débits de liquide et de gaz en entrée de la colonne et le débit en sortie de la pompe à vide. RCH4 est la pureté du méthane en sortie. Les valeurs de %CH4 et %CO2 sont les taux de récupération du CH4 et du CO2 en sortie.

| **Conditions d'entrées** | **Résultats** |
|---|---|
| Pcol = 10 bars | %CH4 = 97 % |
| Qliq = 10 m3/h | Rch4 = 93 % |
| Qgaz = 40 Nm3/h | %CO2 = 92 % |
| Pint = 6 bars | Qint,gaz (% CH4) = 0,34 m3/h (68 %) |
| Pdés = 0,2 bars | Qdés (gaz) = 100,8 m3/h |

| **Conditions d'entrées** | **Résultats** |
|---|---|
| Pcol = 10 bars | %CH4 = 96,8 % |
| Qliq = 10 m3/h | Rch4 = 96,5 % |
| Qgaz = 40 Nm3/h | %CO2 = 95,7 % |
| Pint = 4 bars | Qint,gaz (%CH4) = 0,97 m3/h (52 %) |

| **Conditions d'entrées** | **Résultats** |
|---|---|
| Pcol = 10 bars | %CH4 = 93,8 % |
| Qliq = 10 m3/h | Rch4 = 99,7 % |
| Qgaz = 40 Nm3/h | %CO2 = 99,6 % |
| Pint = 2 bars | Qint,gaz (%CH4) = 12,2 m3/h (8 %) |
| Pdés = 0,2 bars | Qdés (gaz) = 81,4 m3/h |

Comme on le comprend sur ces tableaux, la baisse de la pression en sortie de la cuve CS de séparation que permet d'assurer l'intégration de la pompe à vide au circuit de régénération, en sortie du mélangeur statique, contribue fortement à optimiser la pureté du CH4 et les taux de récupération tant du CH4 que C02.

### Buses de transfert en haut de colonne

Un système de pulvérisation complémentaire SP est également prévu en complément des buses principales pour l'injection d'eau « fraiche » (c'est-à-dire ne provenant pas du cycle de régénération) en appoint de l'injection de l'eau régénérée par les buses BP. Cette eau fraiche, généralement très pauvre en co2 dissous, présente un pouvoir absorbant très important qu'il est intéressant d'utiliser avant dilution dans le circuit d'eau de l'installation.

Ce système de pulvérisation SP est situé au-dessus des buses BP dans la colonne CL (préférablement entre 3 et 10 centimètres du système d'injection de l'eau régénérée que constituent les buses BP).

Il permet sur quelques centimètres d'augmenter encore l'absorption du C02 (jusqu'à 10%).

Les buses qui composent ce système complémentaire sont par exemple au nombre d'une dizaine (typiquement, des buses NOZAL de type AFX-80-02), et permettent un appoint de 450l/h d'eau ou inférieur).

### Fonctionnement

Le dispositif qui vient d'être décrit fonctionne en mode continu et permet d'atteindre méthane la qualité spécifiée pour le gaz réseau (98% CH4).

Un fonctionnement en mode discontinu est également possible, ainsi que décrit ci-dessous.

Un fonctionnement en mode discontinu du type de celui décrit ci-dessous permet d'atteindre pour le

Le gaz méthane en sortie peut ainsi être directement réinjecté dans un réseau urbain.

Ce fonctionnement discontinu se fait par alternance des deux phases suivantes.
- Phase 1 : le dispositif travaille sur une durée supérieure à 1H, préférentiellement supérieure à 1H30, et encore plus préférentiellement inférieure à 3H (typiquement durant 2h) sur le biogaz brut; un gazomètre, par exemple de 50 m3, permet le stockage de la production de biogaz épuré à 95% en méthane.
- Phase 2, le dispositif travaille sur les 50 m3 de biogaz à 95% en méthane issu de la phase 1 ; un biogaz épuré à 98,6% est alors produit en moins de 2h : typiquement 45,5 m3 si le débit de gaz injecté est de 40Nm3/h et si 4m3/h d'eau recyclée sont utilisés.

Les avantages présentés par le mode discontinu sont de permettre, sans difficultés ou contraintes techniques, d'atteindre les spécifications autorisant la réinjection dans le réseau de gaz urbain

A part la mise à disposition d'un gazomètre pour la phase de stockage, aucune installation ou complexité complémentaire n'est nécessaire.

L'installation de l'exploitation comprendra donc essentiellement un digesteur de méthanisation, un dispositif du type de celui qui vient d'être décrit et le cas échéant un gazomètre de stockage.

Un autre avantage de cette façon de procéder est de permettre de gérer la discontinuité de production du biogaz par le méthaniseur.

L'alternance phase 1 et phase 2 est assurée par programmation d'automates gérant les vannes d'aiguillage des flux de gaz aspirés et produits.

En outre, ce mode de fonctionnement est propice aux petites installations produisant de faibles volumes facilement stockables à l'aide d'un gazomètre.

## Revendications

1. Dispositif pour la séparation de deux constituants gazeux dans un biogaz, l'un des deux constituants gazeux étant susceptible d'être soluble, comportant une colonne de lavage (CL) par absorption liquide-gaz, ladite colonne comprenant une zone de séparation (PI) et un réservoir (R) situé sous ladite zone de séparation (PI),
la zone (PI) de séparation comportant des moyens (G) de mise en contact, par circulation à contre-courant, du biogaz et d'une solution liquide apte à absorber sélectivement le constituant gazeux soluble dans celui-ci,
le réservoir (R ) étant adapté pour recevoir un volume de solution absorbante dans laquelle est dissous le constituant gazeux soluble, ledit réservoir (R) comportant une sortie pour l'évacuation de la solution absorbante vers un circuit de régénération (MS, CS)
ledit circuit de régénération comportant un mélangeur statique (MS),
le circuit de régénération comportant une cuve de séparation (CS) en sortie du mélangeur statique (MS),
**caractérisé en ce que** ledit circuit de régénération comporte en outre des moyens de dépression, positionnés en sortie du mélangeur statique (MS), et configurés pour atteindre, en sortie, une pression comprise entre de 0.01 à 0.8 bar permettant la désorbtion du constituant gazeux soluble.

2. Dispositif selon la revendication 1, **caractérisé en ce qu'**il comporte entre la sortie du réservoir (R) et le mélangeur statique (MS) un détendeur (GLCC), la sortie de gaz dudit détendeur (GLCC) étant envoyée avec le biogaz, en entrée de la colonne de lavage (CL), la pression du gaz en sortie dudit détendeur (GLCC) étant une pression intermédiaire entre la pression dans la colonne (CL) et la pression atmosphérique.

3. Dispositif selon la revendication 1, **caractérisé en ce que** le détendeur (GLCC) est un détendeur à séparateur cylindrique de type cyclone.

4. Dispositif selon la revendication 1, **caractérisé en ce que** la pression du gaz en sortie du détendeur (GLCC) est comprise entre1,5 et 6 bars, pour une pression dans la colonne de lavage (CL) de l'ordre de 6 à 10 bars ou supérieure.

5. Dispositif selon la revendication 1, **caractérisé en ce qu'**il comporte dans la colonne de lavage (CL), des buses (BP) de pulvérisation du liquide régénéré et, au-dessus de celles-ci, une pluralité de buses complémentaires (SP) pour l'injection d'eau en appoint de l'injection de l'eau régénérée.

6. Dispositif selon la revendication 5, **caractérisé en ce que** ladite pluralité de buses complémentaires est située à entre 3 et 10 centimètres du système des buses (BP) de pulvérisation du liquide régénéré.

7. Procédé pour la séparation de méthane et de dioxyde de carbone contenus dans un biogaz issu d'une méthanisation, dans lequel ladite séparation est réalisée par un dispositif selon l'une des revendications précédentes.

8. Procédé selon la revendication 7, dans lequel ledit procédé est mis en œuvre selon au moins les deux phases suivantes : selon une première phase le dispositif travaille sur le biogaz brut, le biogaz épuré produit étant stocké, puis selon une deuxième phase, le dispositif traite le biogaz épuré produit lors de la première phase.

9. Procédé selon la revendication 8, dans lequel la première phase est mise en œuvre sur une durée supérieure à 1H, préférentiellement supérieure à 1H30, et encore plus préférentiellement inférieure à 3H.

10. Installation de méthanisation pour exploitation agricole comportant un digesteur de méthanisation et un dispositif de séparation selon l'une des revendications 1 à 6.

11. Installation selon la revendication 10, **caractérisé en ce qu'**il comporte un gazomètre pour le stockage du gaz épuré produit lors de la première phase de mise en œuvre du procédé de fonctionnement discontinu selon l'une des revendications 7 ou 8.
